# EUROPEAN PATENT SPECIFICATION

(11) **EP 3 438 823 B1**
(45) Date of publication and mention of the grant of the patent: **03.08.2022**
(21) Application number: 17774848.0
(22) Date of filing: 27.03.2017
(51) Int. Cl.: G06F 9/50

(54) **CONTROL METHOD AND CONTROL APPARATUS FOR NETWORK SYSTEM, AND SERVER**
STEUERUNGSVERFAHREN UND STEUERUNGSVORRICHTUNG FÜR NETZWERKSYSTEM UND SERVER
PROCÉDÉ ET APPAREIL DE COMMANDE POUR SYSTÈME DE RÉSEAU, ET SERVEUR ASSOCIÉ

(30) Priority: 31.03.2016 JP 2016070569
(43) Date of publication of application: 06.02.2019
(73) Proprietor: NEC Corporation, Tokyo 108-8001 (JP)
(72) Inventor: ISHII Satoru, Tokyo 108-8001 (JP); NAKANO Shintaro, Tokyo 108-8001 (JP); HASEGAWA Hideo, Tokyo 108-8001 (JP); SHIBATA Seiya, Tokyo 108-8001 (JP)
(74) Representative: Reeve, Nicholas Edward
(86) International application number: PCT/JP2017/012223
(87) International publication number: WO 2017/170311

(56) References cited:
- WO-A1-2015/099035
- WO-A1-2015/135611
- WO-A1-2015/143983
- US-A1- 2014 068 045
- NOBACH LEONHARD ET AL: "Open, elastic provisioning of hardware acceleration in NFV environments", 2015 INTERNATIONAL CONFERENCE AND WORKSHOPS ON NETWORKED SYSTEMS (NETSYS), IEEE, 9 March 2015 (2015-03-09), pages 1-5, XP032764878, DOI: 10.1109/NETSYS.2015.7089057 [retrieved on 2015-04-17]
- NOBACH, LEONHARD ET AL.: 'Open, Elastic Provisioning of Hardware Acceleration in NFV Environments' NETWORKED SYSTEMS, 2015 INTERNATIONAL CONFERENCE AND WORKSHOPS, [Online] 20 April 2015, pages 1 - 5, XP032764878 Retrieved from the Internet: <URL:http:// ieeexplore.ieee.org/document/7089057/>> [retrieved on 2017-05-09]
- KACHRIS, CHRISTOFOROS ET AL.: 'Network Function Virtualization based on FPGAs: A Framework for all-Programmable network devices' ARXIV:1406. 0309, [Online] 02 June 2014, pages 266 - 278, XP085017922 Retrieved from the Internet: <URL:https://arxiv.org/abs/1406.0309> [retrieved on 2017-05-09]

## Description

### TECHNICAL FIELD

The present invention relates to a network system including virtual network functions, and in particular, to control techniques of the network system.

### BACKGROUND ART

In current communication systems, various network functions (NFs) such as broadband remote access server (BRAS), network address translation (NAT), router, firewall (FW), and deep packet inspection (DPI) are implemented by dedicated hardware (appliances). As such, when launching a new network service, a network operator is forced to introduce new dedicated hardware appliances. This requires significant costs for purchasing appliances, installation spaces, and the like. In view of such a situation, consideration is given to a technology of virtually implementing network functions implemented by hardware, by software (network function virtualization), recently (See the paper entitled "Network Functions Virtualization - Update White Paper" dated October 15-17, 2013 at the "SDN and OpenFlow World Congress", Frankfurt-Germany (http://portal.etsi.org/NFV/NFV_White_Paper2.pdf).

As an example of network service virtualization, JP 2012-175418 A discloses a method in which a plurality of virtual routers are constructed on communication node devices, and resources of the virtual routers are dynamically distributed according to the communication quality.

Further, a technology of providing various network services by transferring a communication flow to a communication path in which a plurality of virtual network functions (VNFs) are combined is also considered (See the paper by ETSI GS NFV 001 v1.1.1 (2013-10) entitled "Network Functions Virtualization (NFV); Use Cases"
(http://docbox.etsi.org/ISG/NFV/Open/Published/gs_NFV001v010101p%20-%20Use%20Cases. pdf) for example).

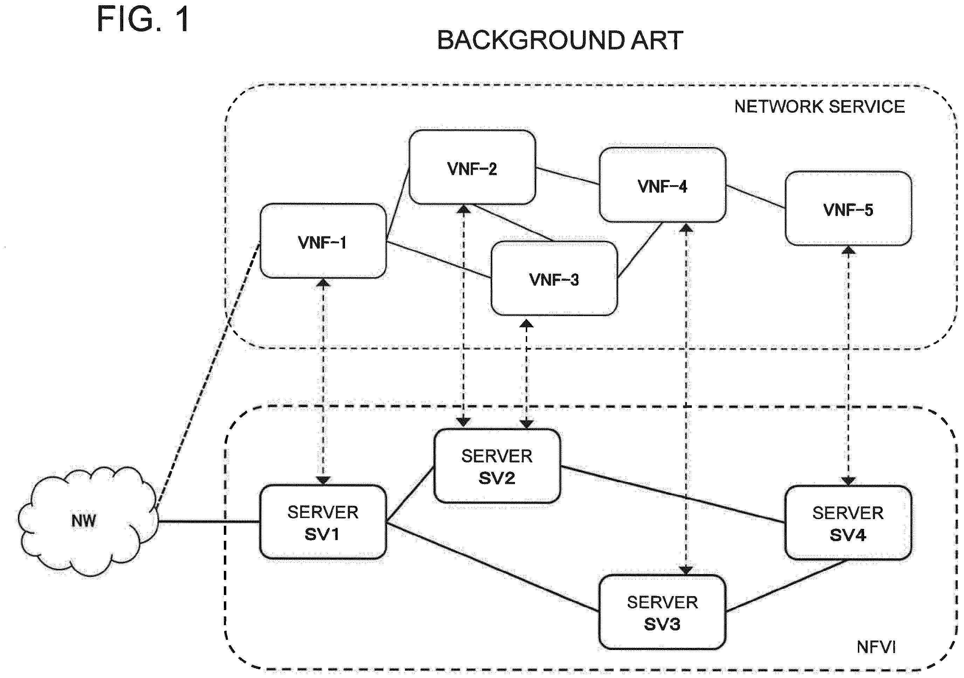

As illustrated in Fig. 1, in network function virtualization, network services are configured and managed by logical links (forwarding graph) of virtual network functions (VNF). In this example, a network service including five virtual network functions VNF-1 to VNF-5 is illustrated in an overlay network.

The virtual network functions VNF-1 to VNF-5 in the forwarding graph operate on general-purpose servers SV1 to SV4 in the NFV infrastructure (NFVI). By operating carrier grade functions on general-purpose servers rather than dedicated servers, it is possible to achieve cost reduction and easy operation.

US 2014/0068045 discloses a network system including physical nodes, in which the network system provides a virtual network system including virtual nodes allocated computer resources of the physical nodes. In a case where the network system performs migration of a first virtual node for executing service using computer resources of a first physical node to a second physical node, the network system creates the communication paths for connecting the second physical node and the neighboring physical nodes on the physical links, starts the service executed by the first virtual node using the computer resources secured by the second physical node, switches communication paths to the created communication paths for switching the virtual links.

WO2015/143983 discloses a method and an apparatus for implementing acceleration processing on a virtual network function (VNF). According to the disclosure, an acceleration request for performing acceleration processing on the VNF is received; a hardware acceleration device that can perform acceleration processing on the VNF is determined according to the acceleration request; an acceleration resource of the hardware acceleration device is allocated to the VNF for performing the acceleration processing on the VNF. As a result, a corresponding hardware acceleration device can be dynamically selected and allocated for the VNF, thereby implementing virtual management of the hardware acceleration device and assisting with resource utilization.

However, when attempting to construct NFV by general-purpose servers, there is a case where a bottleneck occurs in CPU (central processing unit) processing of a server, communication between servers, and the like. In order to prevent such a bottleneck, it is indispensable to achieve high-speed processing of the servers. As a technology of accelerating CPU processing, in addition to an increase of the number of CPU cores, an accelerator technology of connecting a field-programmable gate array (FPGA) to a CPU has been known (for example, "Xeon+FPGA Platform for the Data Center" ISCA/CARL 2015
<http://www.ece.cmu.edu/~calcm/carl/lib/exe/fetch.php?media=carl15-gupta.pdf>).

However, in the case of constructing NFV with use of such a server to which an FPGA is added, a VM/VNF operates not only on the CPU but also on the FPGA. Accordingly, it is necessary to manage a correspondence between the FPGA and the VM in the network. For example, it is necessary to perform update of a FPGA program depending on a VM, and perform addition/update of an FPGA according to addition/update of a VM due to update of a VM such as version upgrade or addition of a VNF

As described above, in a network including not only CPUs of servers but also programmable logic circuits such as FPGAs as a VM/VNF infrastructure, it is necessary to have a special control system in consideration of programmable logic circuits.

In view of the above, we have appreciated that it would be desirable to provide a control method, a control apparatus, a network system, and a server, for efficiently controlling a network including programmable logical circuits as a VM/VNF infrastructure.

### SUMMARY OF THE INVENTION

The invention is defined in the independent claims to which reference should now be made. Advantageous features are set forth in the dependent claims.

According to the present invention, it is possible to efficiently control a network including programmable logic circuits as a VM/VNF infrastructure.

### BRIEF DESCRIPTION OF THE DRAWINGS

Fig. 1 is a schematic network diagram illustrating an example of virtualization of network functions.
Fig. 2 is a schematic network diagram illustrating a first example of a network system to which the present invention is applied.
Fig. 3 is a schematic network diagram illustrating a correspondence relation between physical servers and virtual network functions in a network system to which the present invention is applied.
Fig. 4 is a block diagram illustrating a schematic configuration of a control apparatus according to a first exemplary embodiment of the present invention.
Fig. 5 is a network configuration diagram illustrating an exemplary network system according to the present invention.
Fig. 6 is a network configuration diagram for explaining an operation of controlling a network system according to the present invention.
Fig. 7A is a schematic diagram illustrating exemplary management data of a function management unit in the network system illustrated in Fig. 6.
Fig. 7B is a schematic diagram illustrating exemplary management data of an FPGA management unit in the network system illustrated in Fig. 6.
Fig. 8 is a network configuration diagram for explaining a first example of a control operation in the network system according to the present embodiment.
Fig. 9A is a schematic diagram illustrating exemplary management data of a function management unit in the network system illustrated in Fig. 8.
Fig. 9B is a schematic diagram illustrating exemplary management data of an FPGA management unit in the network system illustrated in Fig. 8.
Fig. 10 is a network configuration diagram for explaining a second example of a control operation in the network system according to the present embodiment.
Fig. 11 is a schematic diagram illustrating exemplary management data of an FPGA management unit in the network system illustrated in Fig. 10.
Fig. 12 is a network configuration diagram for explaining a third example of a control operation in the network system according to the present embodiment.
Fig. 13 is a block diagram illustrating a schematic configuration of an FPGA-equipped server.
Fig. 14 is a sequence chart of the control operation illustrated in Fig. 12.
Fig. 15 is a schematic network diagram illustrating a second example of a network system to which the present invention is applied.
Fig. 16 is a schematic network diagram illustrating a third example of a network system to which the present invention is applied.

### EXEMPLARY EMBODIMENTS

### <Outline of Exemplary Embodiments>

According to exemplary embodiments of the present invention, in a network system in which virtual network functions (VNFs) can operate on servers, a network is controlled with use of a correspondence relation between a programmable logical circuit included in a server, a virtual machine (VM) operating on the server, and a VNF implemented by the VM of the server. For example, by referring to information indicating which server supports a programmable logic circuit, what program is installed in a programmable logic circuit, and which VM and which VNF operate on which server, it is possible to identify a VM and/or a programmable logic circuit that should be updated. As described above, by using information regarding a programmable logic circuit and VM/VNF information associated therewith, it is possible to control update of a circuit configuration program of a programmable logic circuit, addition/update of a programmable logic circuit according to addition/update of a VM, and the like, allowing efficient control of a network including programmable logic circuits.

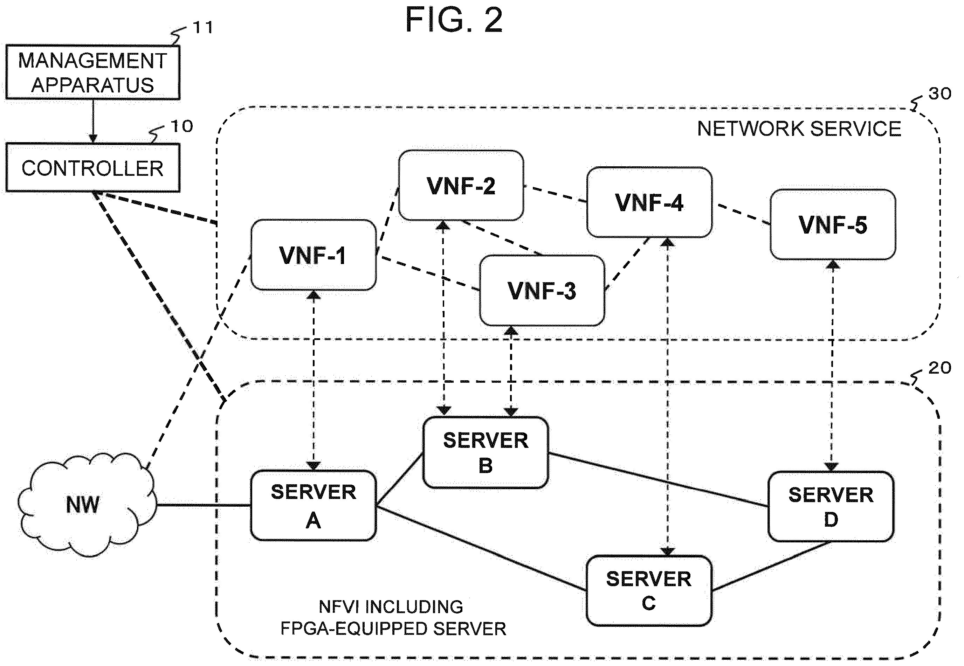

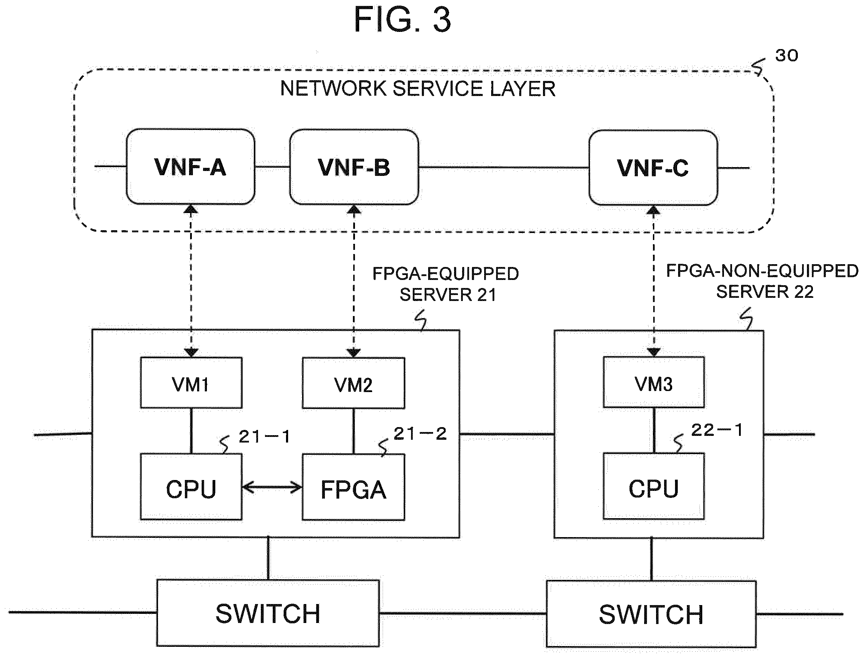

First, an exemplary system configuration for explaining respective exemplary embodiments of the present invention will be described with reference to Figs. 2 and 3. The system configuration is a simplified example for preventing complicated description, and is not intended to limit the present invention.

### <System>

As illustrated in Fig. 2, a controller 10 controls a lower-layer network 20 including a plurality of servers, and an upper-layer network 30 including a plurality of VNFs, according to an instruction from a management apparatus 11. In this example, it is assumed for simplicity that the lower-layer network 20 includes servers A, B, C, and D, and the upper-layer network 30 includes virtual network functions VNF-1 to VNF-5.

At least one of the servers in the lower-layer network 20 is a server including a programmable logic circuit. As described below, a programmable logic circuit is a hardware circuit capable of performing programmable routine processing at a high speed, and is operable as an accelerator of a connected CPU. Further, a programmable logic circuit is able to implement a user-desired logic function in a short period of time, and also has an advantage that it is rewritable. Hereinafter, an FPGA is shown as an example of a programmable logic circuit. A server in which a CPU and an FPGA are connected with each other is called an FPGA-equipped server, and a server having no FPGA is called an FPGA-non-equipped server.

Each VNF in the upper-layer network 30 is set on a physical server of the lower-layer network 20. For example, in the system illustrated in Fig. 2, the VNF-1, the VNF-4, and the VNF-5 are set on the server A, the server C, and the sever D, respectively, and the VNF-2 and the VNF-3 are set on a single physical server B. The management apparatus 11 determines how to deploy VNFs on FPGA-equipped servers and FPGA-non-equipped servers. Fig. 3 illustrates an exemplary deployment of VNFs.

In Fig. 3, an FPGA-equipped server 21 in the lower-layer network 20 has a configuration in which a CPU 21-1 and an FPGA 21-2 are connected with each other. In Fig. 3, a virtual machine VM1 is configured on the CPU 21-1 and a virtual machine VM2 is configured on the FPGA 21-2, respectively. A VNF-A in the upper-layer network 20 is deployed on the virtual machine VM1, and a VNF-B is deployed on the virtual machine VM2 on the FPGA 21-2, respectively. The FPGA 21-2 is able to reconfigure a desired VNF by loading configuration data via a device for controlling the FPGA-equipped server 21, such as the controller 10. It is also possible to configure a plurality of virtual machines VM on the CPU 21-1 or the FPGA 21-2, and to deploy a VNF on each of the virtual machines. An FPGA-non-equipped server 22 has a single CPU 22-1, and one or more virtual machines VM3 may be configured thereon, and a VNF may be deployed thereon.

In the network system as described above, the controller 10 is able to individually perform control such as addition, setting change, and deletion of a VNF, a VM, and an FPGA in an FPGA-equipped server and an FPGA-non-equipped server, in accordance with an instruction from the management apparatus 11. While the controller 10 can collectively manage the network system as described above, it is also possible to have a configuration including controllers for respective layers such that a controller controls the upper-layer network 30 (VNF layer) and another controller controls the lower-layer network 20 (NFVI layer). Hereinafter, the controller 10 according to exemplary embodiments of the present invention will be described in detail with reference to the drawings.

### 1. First Exemplary Embodiment

### 1.1) Control apparatus

A controller 10 according to a first exemplary embodiment of the present invention controls servers and switches in a network system, and performs control of FPGAs, VMs, or VNFs and path control, according to an instruction from the management apparatus 11.

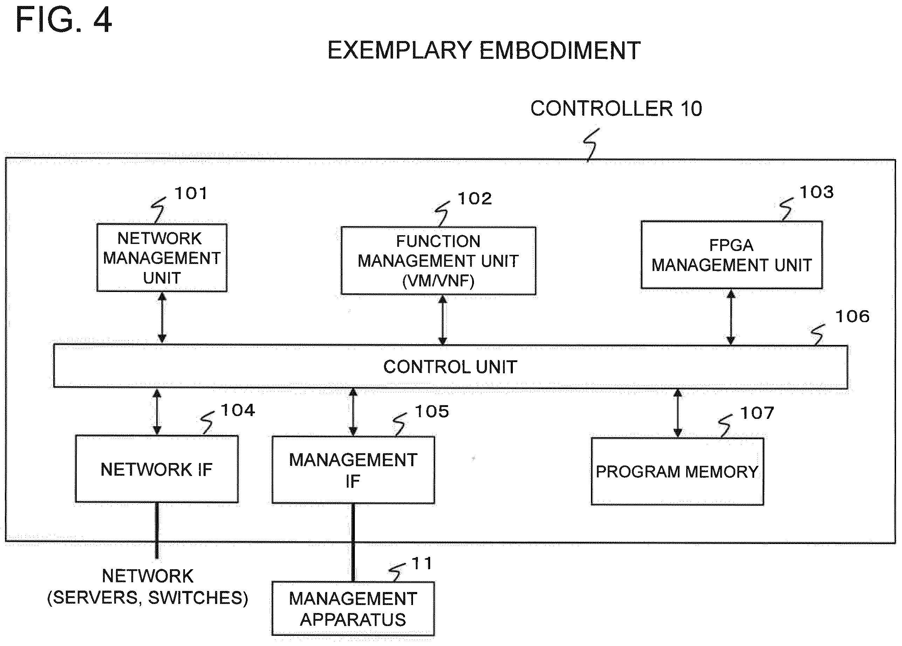

Referring to Fig. 4, the controller 10 includes a network management unit 101, a function management unit 102, and an FPGA management unit 103. The controller 10 also includes a network interface 104 that connects to each of servers and switches in the network system. The controller 10 is connected via a management interface 105 to the management apparatus 11 which is operated by an operator. A control unit 106 of the controller 10 executes programs stored in a program memory 107 to control the network management unit 101, the function management unit 102, and the FPGA management unit 103, and perform control such as addition, change, and deletion of a VM/FPGA.

The network management unit 101 manages information of a network including servers and switches, for instance topology information. The function management unit 102 manages functions operating on respective servers, that is, virtual machines VMs and virtual network functions VNFs. For example, the function management unit 102 manages which VM is operating on which server. The FPGA management unit 103 manages an FPGA of each server . For instance, the FPGA management unit 103 manages which server is FPGA-equipped and which FPGA program is installed.

The control unit 106 controls a forwarding path of the network service based on information managed by the management units 101 to 103. For example, the control unit 106 identifies a path of the upper-layer network 30 based on function information from the function management unit 102 and topology information from the network management unit 101. The control unit 106 also identifies a correspondence relation between a VM and an FPGA to be updated, based on information related to FPGAs from the FPGA management unit 103 and function information from the function management unit 102.

### 1.2) System configuration

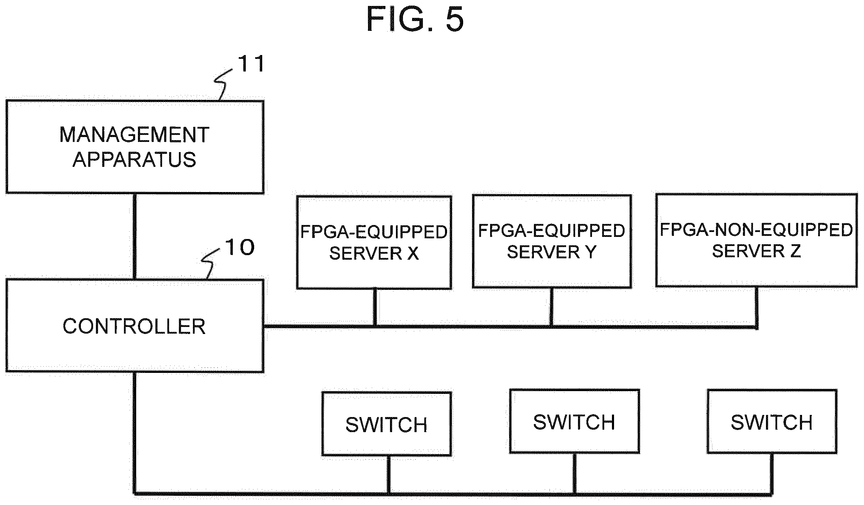

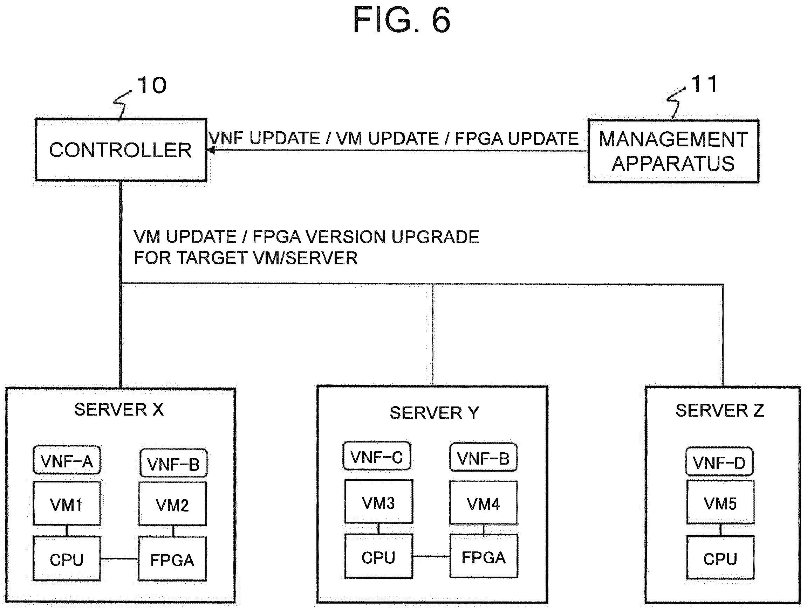

Hereinafter, description will be given on a control method according to the present embodiment with reference to the system illustrated in Fig. 5, in order to avoid complication of description. Accordingly, it is assumed that servers X and Y are FPGA-equipped, and a server Z is FPGA-non-equipped, and that the controller 10 controls VMs/FPGAs of respective servers and respective switches according to an instruction from the management apparatus 11. Fig. 6 illustrates a configuration for explaining a specific example of control.

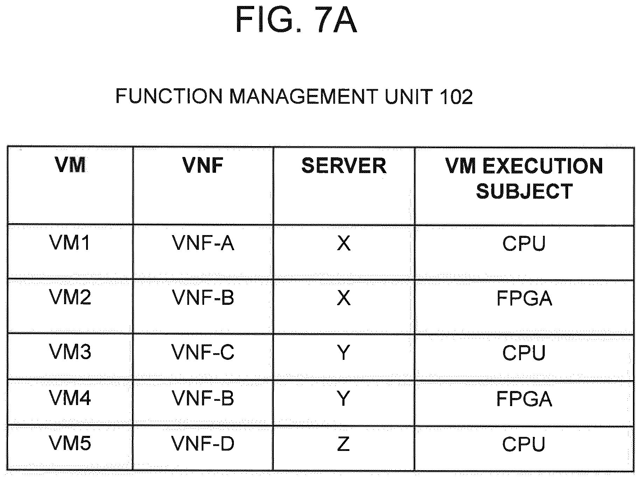

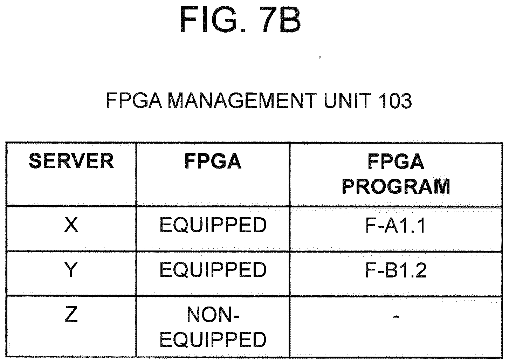

As illustrated in Fig. 6, it is assumed that a virtual network function is deployed on each of the servers X, Y, and Z. In more detail, the virtual machine VM1 is configured on the CPU of the FPGA-equipped server X, and the virtual machine VM2 is configured on the FPGA of the FPGA-equipped server X. The virtual network function VNF-A is deployed on the virtual machine VM1, and the virtual network function VNF-B is deployed on the virtual machine VM2. The virtual machine VM3 is configured on the CPU of the FPGA-equipped server Y, and the virtual machine VM4 is configured on the FPGA of the FPGA-equipped server Y. The virtual network function VNF-C is deployed on the virtual machine VM3, and the virtual network function VNF-B is deployed on the virtual machine VM4. The virtual machine VM5 is configured on the CPU of the FPGA-non-equipped server Z, and the virtual network function VNF-D is deployed on the virtual machine VM5. In such a system, when the management apparatus 11 instructs the controller 10 to update a VNF, a VM, or an FPGA, the controller 10 identifies a target server and VM through the function management unit 102 and the FPGA management unit 103, and performs update of the instructed VNF or VM or version upgrade of the instructed FPGA program. In the function management unit 102 and the FPGA management unit 103, management tables as illustrated in Figs 7A and 7B are stored.

As illustrated in Fig. 7A, the function management unit 102 has a management table which registers correspondence relations among the VMs, the VNFs, the servers, and the VM execution subjects of the servers in the network system. This means that by referring to the management table of the function management unit 102, it is possible to identify which of the virtual machines VM1 to VM5 operating in the network system is operating on which execution subject (CPU or FPGA) of which server, and which VNF is operating on the virtual machine.

Further, as illustrated in Fig. 7B, the FPGA management unit 103 has a management table in which FPGA information is registered. The FPGA information includes whether or not each server in the network system is FPGA-equipped, and which FPGA program is installed in each FPGA. For example, the server X is FPGA-equipped, and an FPGA program F-A1.1 is installed therein.

The controller 10 of the present embodiment can use the aforementioned management tables of the function management unit 102 and the FPGA management unit 103 to control the network/VNF/VM/FPGA.

It should be noted that in the controller 10, the functions of the network management unit 101, the function management unit 102, the FPGA management unit 103, and the control unit 105 as described below may also be realized by executing programs, stored in the program memory 107, on the CPU. Hereinafter, examples of the aforementioned VM/FPGA control will be described with reference to the drawings.

### 1.3) Control Operation

### <VNF Update>

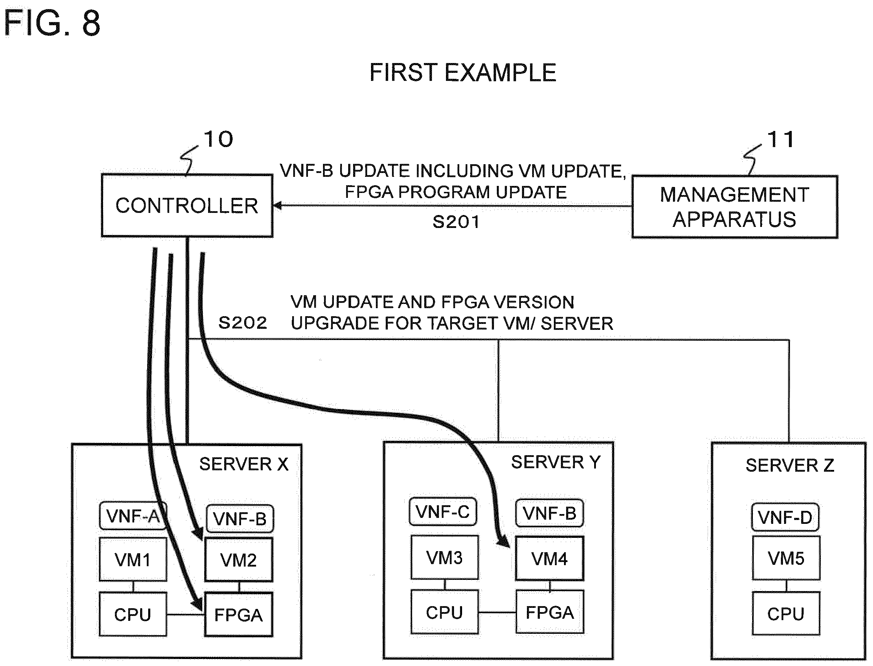

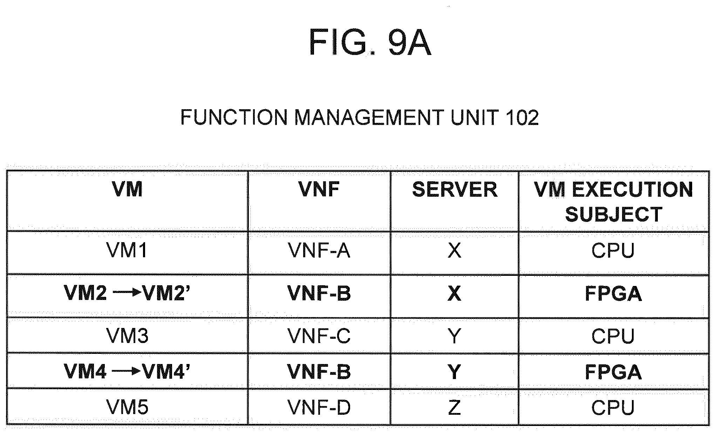

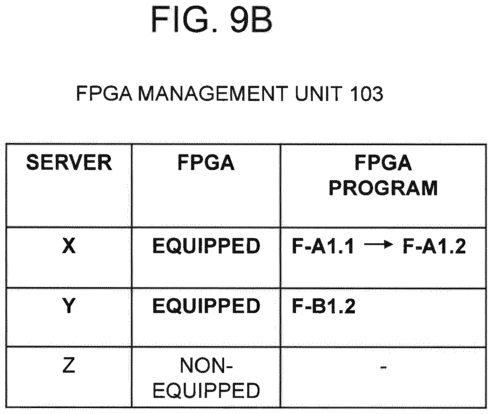

As illustrated in Fig. 8, when receiving an instruction to update the VNF-B including VM update and version upgrade of the FPGA program F-A1.1 from the management apparatus 11 (operation S201), the control unit 106 of the controller 10 refers to the management table of the function management unit 102 to identify the FPGA and the VM2 of the server X associated with the VNF-B and the FPGA and the VM4 of the server Y associated with the VNF-B. The control unit 106 also refers to the management table of the FPGA management unit 103 to identify the program F-A1.1 of the server X. Then, the control unit 106 updates the VM2 of the target server X to VM2', upgrades the version of the FPGA program from F-A1.1 to F-A 1.2, and updates the VM4 of the server Y to VM4', via the network interface 104 (operation S202). When completing the update described above, the control unit 106 updates the management tables of the function management unit 102 and the FPGA management unit 103 as illustrated in Figs. 9A and 9B.

Addition or deletion of a VM is also controllable similarly. For example, in the case of adding a new VM to the server X, the control unit 106 instructs the target server X to add the new VM, via the network interface 104. Meanwhile, in the case of deleting the VM2 from the server X, for example, the control unit 106 instructs the target server X to delete the VM2, via the network interface 104.

### <FPGA Program Update>

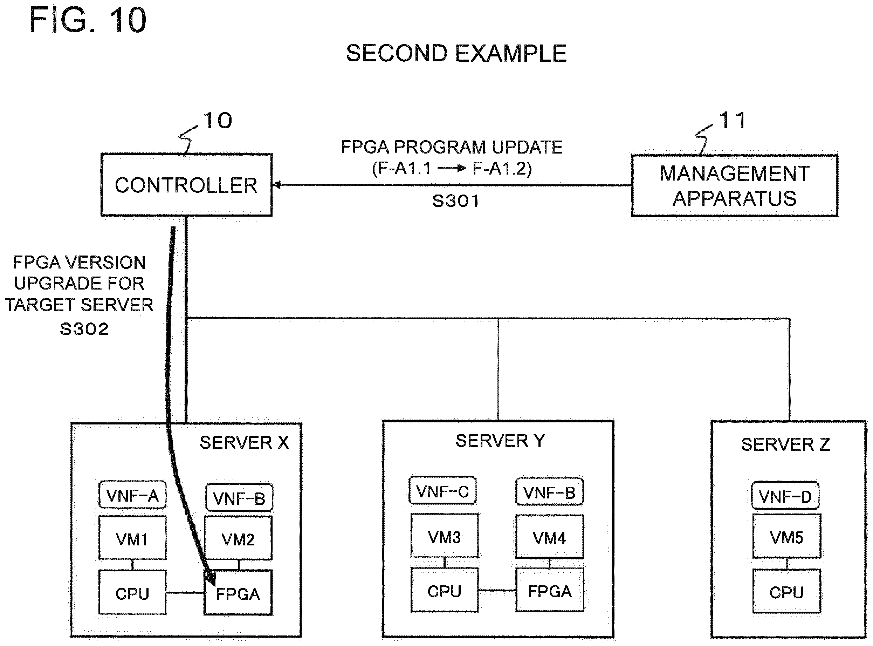

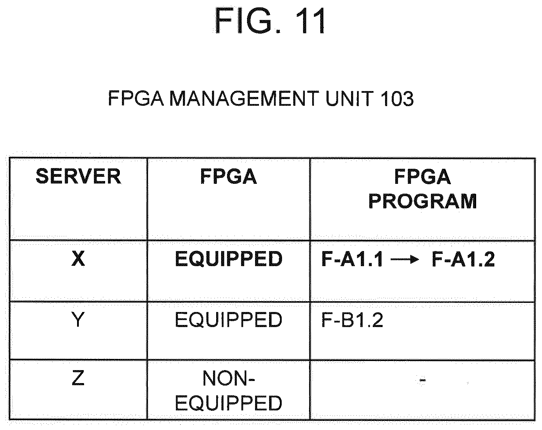

As illustrated in Fig. 10, when receiving an instruction to perform version upgrade of the FPGA program F-A1.1 from the management apparatus 11 (operation S301), the control unit 106 of the controller 10 refers to the management table of the FPGA management unit 103 to identify the FPGA program F-A1.1 of the server X. Then, the control unit 106 upgrades the version of the FPGA program of the target server X from F-A1.1 to F-A1.2, via the network interface 104 (operation S302). When completing the update described above, the control unit 106 updates the management table of the FPGA management unit 103 as illustrated in Fig 11.

Addition or deletion of an FPGA is also controllable similarly. For example, in the case of adding a new FPGA to the server X, the control unit 106 instructs the target server X to add (install) the new FPGA program, via the network interface 104. Meanwhile, in the case of deleting the FPGA program F-A1.1 from the server X, for example, the control unit 106 instructs the target server X to delete FPGA program F-A1.1, via the network interface 104.

### < Processing of CPU as Substitute During FPGA Program Update>

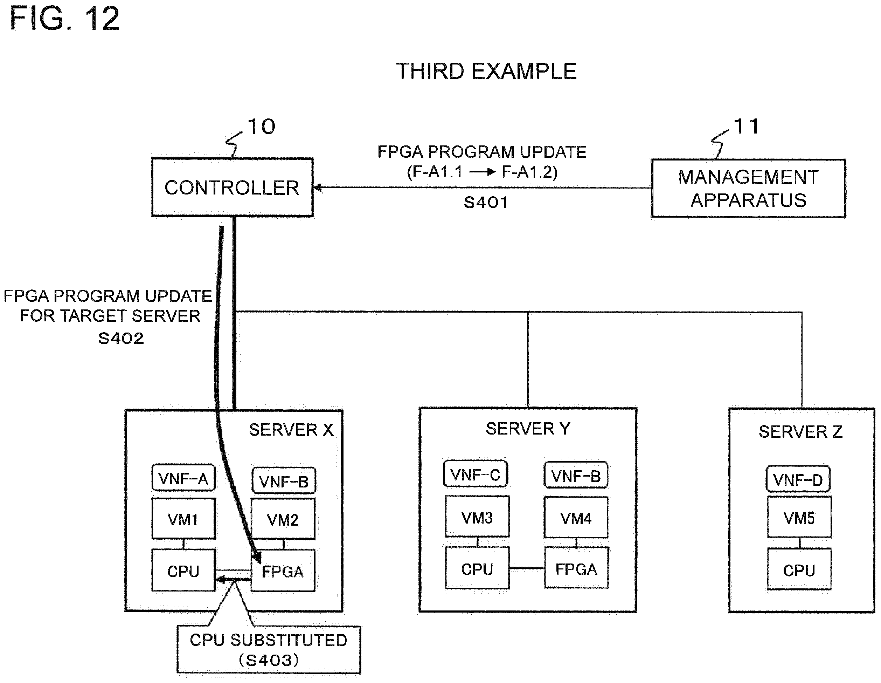

Fig. 12 illustrates another example of FPGA program update control. In Fig. 12, when receiving an instruction to perform version upgrade of the FPGA program F-A1.1 from the management apparatus 11 (operation S401), the controller 10 upgrades the version of the FPGA program of the target server X from F-A1.1 to F-A1.2 (operation S402). At that time, the CPU performs data processing of VM2 that the FPGA has performed, as a substitute for the FPGA (operation S403). Thereby, it is possible to continue data processing during FPGA update without performing temporal migration or the like.

The control for the CPU to perform the data processing of the FPGA as a substitute for the FPGA may be performed autonomously when the server X receives an FPGA program update instruction from the controller 10. Alternatively, the controller 10 may instruct the server X to cause the CPU as the substitute to perform the processing. For example, a processing substitution instruction may be included in an FPGA program update instruction from the controller 10.

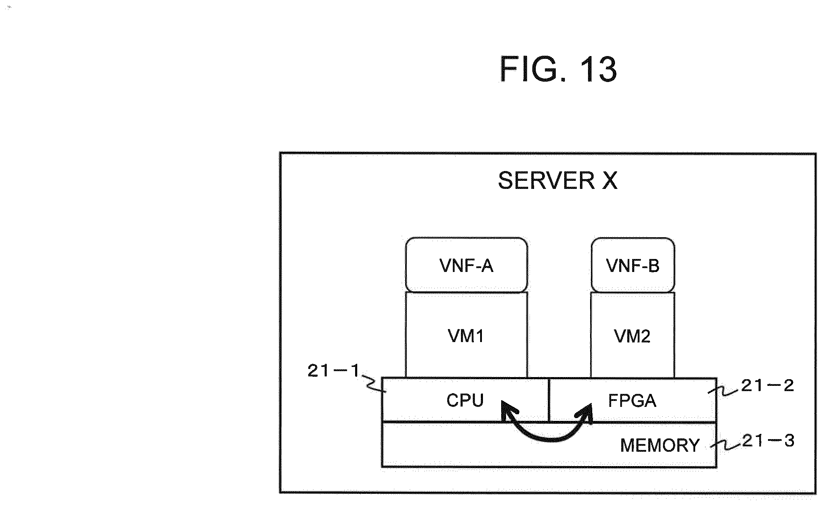

As illustrated in Fig. 13, control to cause the CPU 21-1 to perform data processing performed on the VM2 of the FPGA 21-2 as a substitute for the FPGA 21-2 can be made via a shared memory 21-3, for example.

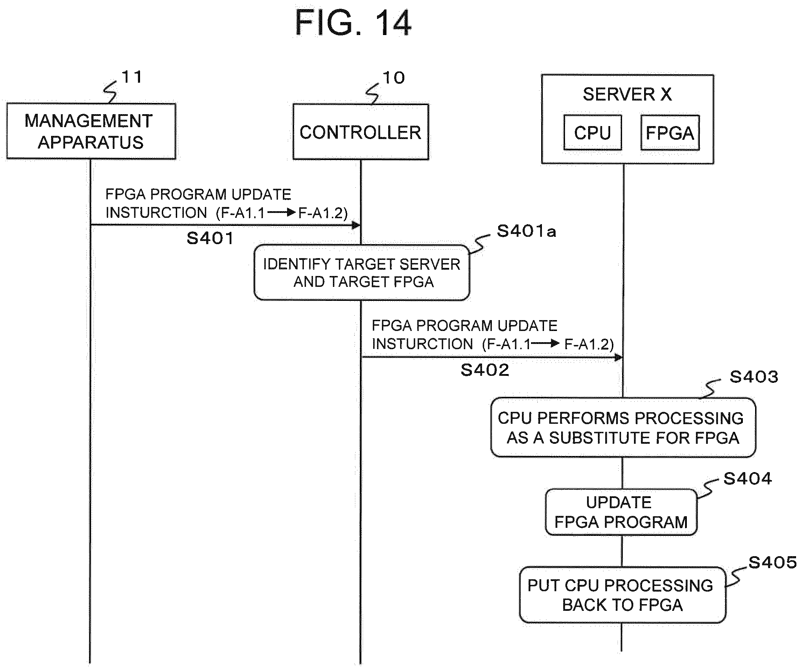

Hereinafter, FPGA program update control as illustrated in Fig. 12 will be described in more detail with reference to Fig. 14.

As illustrated in Fig. 14, when receiving an instruction to perform version upgrade of the FPGA program F-A1.1from the management apparatus 11 (operation S401), the control unit 106 of the controller 10 refers to the management table of the FPGA management unit 103 to identify the FPGA program F-A1.1 of the server X (operation S401a), and transmits an update instruction to the target server X to upgrade the version of the FPGA program from F-A1.1 to F-A1.2, via the network interface 104 (operation S402).

When the server X receives the FPGA program update instruction from the controller 10, the server X causes the CPU to autonomously perform data processing performed by the FPGA as a substitute for the FPGA. First, data processing of the VM2 performed by the FPGA is autonomously performed by the CPU, resulting in that the CPU performs data processing of VM1 and VM2 (operation S403). Then, update processing is performed with use of the update FPGA program received from the controller 10 (operation S404). When program update on the FPGA is completed, the FPGA takes over the data processing of the VM2 from the CPU and performs it on the updated program F-A1.2 (operation S405). In this way, during the time of version upgrade of the FPGA program, data processing that should be performed by the FPGA during FPGA update is continued by the CPU. Accordingly, the server X is able to update the FPGA program without interrupting the processing.

As described above, the control to cause the CPU to perform data processing performed by the FPGA as a substitute for the FPGA may be performed by the server X autonomously. Alternatively, the controller 10 may perform the control under the initiative of the controller 10 by including a processing substitution instruction in the FPGA program update instruction.

### 1.4) Effect

As described above, according to the network control by the present embodiment, it is possible to identify a VM and/or an FPGA to be updated, with use of a correspondence relation among an FPGA included in a server, a virtual machine (VM) operating on the server, and a VNF implemented by the VM of the server. Thereby, it is possible to perform control such as update of an FPGA program, and addition/update of an FPGA associated with the addition/update of a VM, allowing efficient control of a network including FPGAs.

### 2. Other Exemplary Embodiments

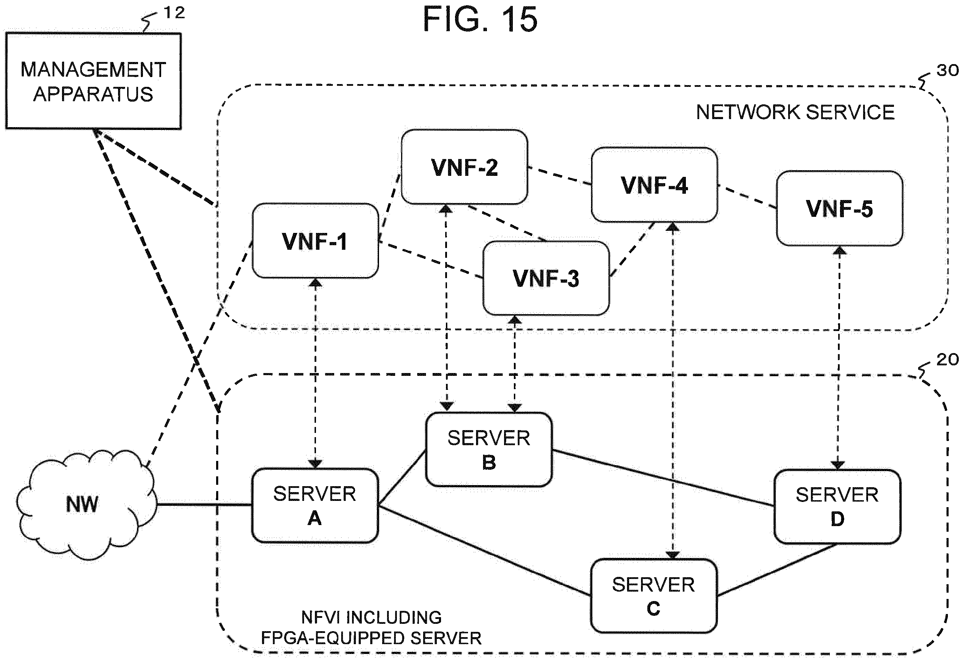

While the aforementioned embodiment illustrates the case where the management apparatus 11 collectively manages a network system via the controller 10, it is also acceptable that a management apparatus in which the management apparatus 11 and the controller 10 are integrated collectively manages a network. For example, as illustrated in Fig. 15, it is also possible that a management apparatus 12 includes functions of the management apparatus 11 and the controller 10, and that the management apparatus 12 collectively manages a network system.

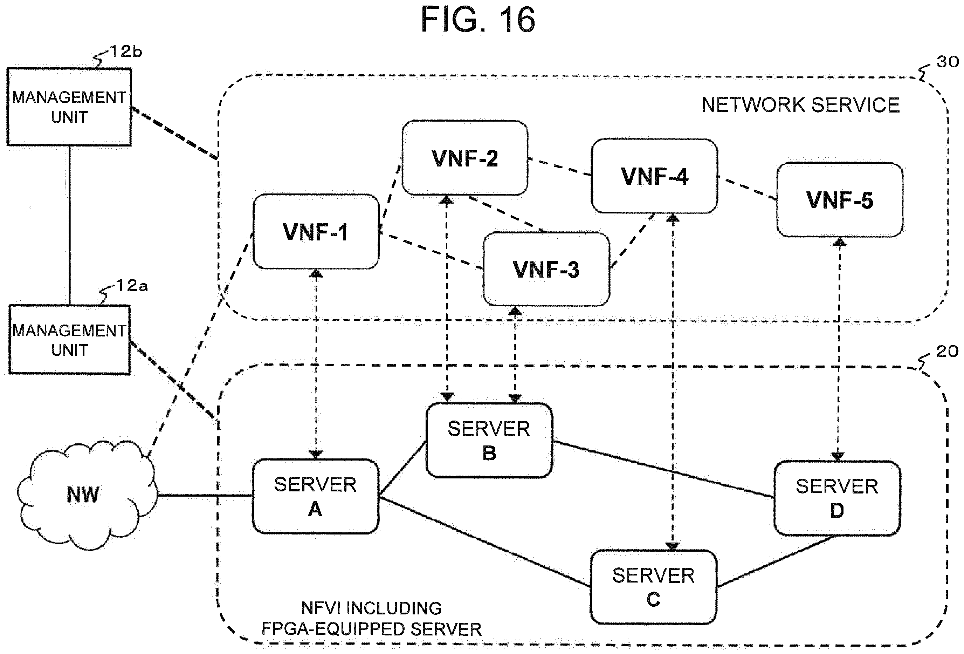

Further, the present invention is not limited to collective management described above. The present invention may have a configuration in which respective layers of a multilayer system are managed by different management units in cooperation with each other. Fig. 16 illustrates an example of such a distributed management system.

As illustrated in Fig. 16, a network system includes a management unit 12a that manages the lower-layer network 20 (VNFI layer) and a management unit 12b that manages the upper-layer network 30 (VNF layer). The management units 12a and 12b manage the lower-layer network 20 and the upper-layer network 30 in cooperation with each other. A management method thereof is the same as that of the exemplary embodiments described above. Accordingly, the description is omitted.

The management units 12a and 12b that manage respective layers may be configured such that individual devices communicably connected with each other perform the management operation of the respective exemplary embodiments in cooperation with each other, or that they perform the management operation under management of a host device. It is also acceptable to have a configuration in which the management units 12a and 12b that manage the respective layers or a host management unit that manages the management units 10a and 10b may be in one management apparatus while being separated functionally.

### INDUSTRIAL APPLICABILITY

The present invention is applicable to a system in which virtual network functions (VNF) are deployed on a network.

### REFERENCE SIGNS LIST

- 10: controller
- 11, 12: management apparatus
- 12a, 12b: management unit
- 20: lower-layer network
- 21-1: CPU
- 21-2: FPGA
- 22-1: CPU
- 30: upper-layer network
- 101: network management unit
- 102: function management unit
- 103: FPGA management unit
- 104: network interface
- 105: management interface
- 106: control unit
- 107: program memory
- VNF: virtual network function

## Claims

1. A control apparatus (10) for a network including servers on which virtual network functions operate, the control apparatus comprising:
storage means (102, 103) configured to store a configuration information among a programmable logic circuit (21-2) included in a server (21), a virtual machine (VM1, VM2) operating on the server (21), and a virtual network function (VNF-A, VNF-B) implemented by the virtual machine (VM1, VM2) of the server (21); and
control means (106) configured to control at least the virtual machine (VM2) and the programmable logic circuit (21-2) on which the virtual machine (VM2) operates, based on the configuration information, wherein the control means (106) is further configured to perform addition, update, or deletion of the programmable logic circuit (21-2);
wherein when updating a program of the programmable logic circuit, the control means (106) causes a central processing unit (CPU) of the server (21) to perform data processing of the virtual machine (VM2) operating on the programmable logic circuit (21-2) as a substitute for the programmable logic circuit (21-2).

2. The control apparatus (10) according to claim 1, wherein
the control means (106) is configured to update a program of the programmable logic circuit (21-2).

3. The control apparatus (10) according to claims 1 or 2, wherein
the control means (106) is configured to cause a central processing unit (CPU) of the server to perform data processing of the virtual machine (VM2) operating on the programmable logic circuit (21-2) as a substitute for the programmable logic circuit (21-2).

4. A control method for a network including servers on which virtual network functions operate, the method comprising:
by storage means (102, 103), storing a configuration information among a programmable logic circuit (21-2) included in any of the servers (21), a virtual machine (VM1, VM2) operating on the server (21), and a virtual network function (VNF-A, VNF-B) implemented by the virtual machine (VM1, VM2) of the server (21), and
by control means (106), controlling at least the virtual machine and the programmable logic circuit on which the virtual machine operates, based on the configuration information, and performing addition, update, or deletion of the programmable logic circuit (21-2);
wherein by the control means (106), when updating a program of the programmable logic circuit (21-2), causing a central processing unit (CPU) of the server to perform data processing of the virtual machine operating on the programmable logic circuit (21-2) as a substitute for the programmable logic circuit (21-2).

5. The control method according to claim 4, further comprising
by the control means (106), updating a program of the programmable logic circuit (21-2).

6. The control method according to claim 4 or 5, further comprising
by the control means (106), causing a central processing unit (CPU) of the server to perform data processing of the virtual machine operating on the programmable logic circuit (21-2) as a substitute for the programmable logic circuit (21-2).

7. A network system including servers on which virtual network functions operate, the network system comprising:
a network in which a plurality of servers including at least one server supporting a programmable logic circuit are connected; and
the control apparatus according to any of claims 1 to 3.

8. A program for causing a computer to execute the method of any of claims 4 to 6.

## Patentansprüche

1. Steuervorrichtung (10) für ein Netzwerk mit Servern, auf denen virtuelle Netzwerkfunktionen arbeiten, wobei die Steuervorrichtung Folgendes umfasst:
Speichermittel (102, 103), konfiguriert zum Speichern einer Konfigurationsinformation zwischen einer in einem Server (21) enthaltenen programmierbaren Logikschaltung (21-2), einer auf dem Server (21) arbeitenden virtuellen Maschine (VM1, VM2) und einer durch die virtuelle Maschine (VM1, VM2) des Servers (21) implementierten virtuellen Netzwerkfunktion (VNF-A, VNF-B); und
Steuermittel (106), konfiguriert zum Steuern zumindest der virtuellen Maschine (VM2) und der programmierbaren Logikschaltung (21-2), auf der die virtuelle Maschine (VM2) arbeitet, auf der Basis der Konfigurationsinformation, wobei das Steuermittel (106) ferner zum Durchführen von Hinzufügen, Aktualisieren oder Löschen der programmierbaren Logikschaltung (21-2) konfiguriert ist;
wobei das Steuermittel (106) beim Aktualisieren eines Programms der programmierbaren Logikschaltung bewirkt, dass eine Zentraleinheit (CPU) des Servers (21) Datenverarbeitung der auf der programmierbaren Logikschaltung (21-2) arbeitenden virtuellen Maschine (VM2) als Ersatz für die programmierbare Logikschaltung (21-2) durchführt.

2. Steuervorrichtung (10) nach Anspruch 1, wobei
das Steuermittel (106) zum Aktualisieren eines Programms der programmierbaren Logikschaltung (21-2) konfiguriert ist.

3. Steuervorrichtung (10) nach Anspruch 1 oder 2, wobei
das Steuermittel (106) konfiguriert ist zum Bewirken, dass eine Zentraleinheit (CPU) des Servers Datenverarbeitung der auf der programmierbaren Logikschaltung (21-2) arbeitenden virtuellen Maschine (VM2) als Ersatz für die programmierbare Logikschaltung (21-2) durchführt.

4. Steuerverfahren für ein Netzwerk mit Servern, auf denen virtuelle Netzwerkfunktionen arbeiten, wobei das Verfahren Folgendes beinhaltet:
Speichern, durch Speichermittel (102, 103), einer Konfigurationsinformation zwischen einer in einem der Server (21) enthaltenen programmierbaren Logikschaltung (21-2), einer auf dem Server (21) arbeitenden virtuellen Maschine (VM1, VM2) und einer von der virtuellen Maschine (VM1, VM2) des Servers (21) implementierten virtuellen Netzwerkfunktion (VNF-A, VNF-B), und
Steuern, durch Steuermittel (106), zumindest der virtuellen Maschine und der programmierbaren Logikschaltung, auf der die virtuelle Maschine arbeitet, auf der Basis der Konfigurationsinformation, und Durchführen von Hinzufügen, Aktualisieren oder Löschen der programmierbaren Logikschaltung (21-2);
wobei das Steuermittel (106) beim Aktualisieren eines Programms der programmierbaren Logikschaltung (21-2) bewirkt, dass eine Zentraleinheit (CPU) des Servers Datenverarbeitung der auf der programmierbaren Logikschaltung (21-2) arbeitenden virtuellen Maschine als Ersatz für die programmierbare Logikschaltung (21-2) durchführt.

5. Steuerverfahren nach Anspruch 4, das ferner Folgendes beinhaltet:
Aktualisieren eines Programms der programmierbaren Logikschaltung (21-2) durch das Steuermittel (106).

6. Steuerverfahren nach Anspruch 4 oder 5, das ferner Folgendes beinhaltet:
Bewirken, durch das Steuermittel (106), dass eine Zentraleinheit (CPU) des Servers Datenverarbeitung der auf der programmierbaren Logikschaltung (21-2) arbeitenden virtuellen Maschine als Ersatz für die programmierbare Logikschaltung (21-2) durchführt.

7. Netzwerksystem mit Servern, auf denen virtuelle Netzwerkfunktionen arbeiten, wobei das Netzwerksystem Folgendes umfasst:
ein Netzwerk, in dem mehrere Server einschließlich mindestens eines eine programmierbare Logikschaltung unterstützenden Servers verbunden sind; und
die Steuervorrichtung nach einem der Ansprüche 1 bis 3.

8. Programm zum Bewirken, dass ein Computer das Verfahren nach einem der Ansprüche 4 bis 6 ausführt.

## Revendications

1. Appareil de commande (10) pour un réseau comprenant des serveurs sur lesquels fonctionnent des fonctions de réseau virtuel, l'appareil de commande comprenant :
un moyen de stockage (102, 103) configuré pour stocker une information de configuration parmi un circuit logique programmable (21-2) inclus dans un serveur (21), une machine virtuelle (VM1, VM2) fonctionnant sur le serveur (21) et une fonction de réseau virtuel (VNF-A, VNF-B) implémentée par la machine virtuelle (VM1, VM2) du serveur (21) ; et
un moyen de commande (106) configuré pour commander au moins la machine virtuelle (VM2) et le circuit logique programmable (21-2) sur lequel fonctionne la machine virtuelle (VM2), en fonction des informations de configuration, le moyen de commande (106) étant en outre configuré pour réaliser un ajout, une mise à jour ou une suppression du circuit logique programmable (21-2) ;
dans lequel lors de la mise à jour d'un programme du circuit logique programmable, le moyen de commande (106) amène une unité centrale de traitement (CPU) du serveur (21) à réaliser un traitement de données de la machine virtuelle (VM2) fonctionnant sur le circuit logique programmable (21-2) en remplacement du circuit logique programmable (21-2).

2. Appareil de commande (10) selon la revendication 1, dans lequel le moyen de commande (106) est configuré pour mettre à jour un programme du circuit logique programmable (21-2).

3. Appareil de commande (10) selon les revendications 1 ou 2, dans lequel le moyen de commande (106) est configuré pour qu'une unité centrale de traitement (CPU) du serveur réalise un traitement de données de la machine virtuelle (VM2) fonctionnant sur le circuit logique programmable (21-2) en remplacement du circuit logique programmable (21-2).

4. Procédé de commande pour un réseau comprenant des serveurs sur lesquels fonctionnent des fonctions de réseau virtuel, le procédé comprenant :
par un moyen de stockage (102, 103), le stockage d'une information de configuration parmi un circuit logique programmable (21-2) inclus dans l'un des serveurs (21), une machine virtuelle (VM1, VM2) fonctionnant sur le serveur (21) et une fonction de réseau virtuel (VNF-A, VNF-B) implémentée par la machine virtuelle (VM1, VM2) du serveur (21), et
par un moyen de commande (106), la commande au moins de la machine virtuelle et du circuit logique programmable sur lequel la machine virtuelle fonctionne, en fonction de l'information de configuration, et la réalisation d'un ajout, d'une mise à jour ou d'une suppression du circuit logique programmable (21-2) ;
dans lequel par le moyen de commande (106), lors de la mise à jour d'un programme du circuit logique programmable (21-2), la commande d'une unité centrale de traitement (CPU) du serveur pour réaliser un traitement des données de la machine virtuelle fonctionnant sur le circuit logique programmable (21-2) en remplacement du circuit logique programmable (21-2).

5. Procédé de commande selon la revendication 4, comprenant en outre
par le moyen de commande (106), la mise à jour d'un programme du circuit logique programmable (21-2).

6. Procédé de commande selon la revendication 4 ou 5, comprenant en outre
par le moyen de commande (106), la commande d'une unité centrale de traitement (CPU) du serveur pour réaliser un traitement de données de la machine virtuelle fonctionnant sur le circuit logique programmable (212) en remplacement du circuit logique programmable (21-2).

7. Système de réseau comprenant des serveurs sur lesquels fonctionnent des fonctions de réseau virtuel, le système de réseau comprenant :
un réseau dans lequel est connectée une pluralité de serveurs comprenant au moins un serveur prenant en charge un circuit logique programmable ; et
l'appareil de commande selon l'une quelconque des revendications 1 à 3.

8. Programme amenant un ordinateur à exécuter le procédé selon l'une quelconque des revendications 4 à 6.
